# EUROPÄISCHE PATENTSCHRIFT

(11) **EP 0 547 346 B1**
(45) Veröffentlichungstag und Bekanntmachung des Hinweises auf die Patenterteilung: **11.12.1996**
(21) Anmeldenummer: 92118651.6
(22) Anmeldetag: 31.10.1992
(51) Int. Cl.: B62D 29/00

(54) **Wagenkasten für Kraftfahrzeuge, insbesondere Personenwagen**
Body for automobiles, especially for passengers
Superstructure pour véhicule automobile, spécialement pour véhicule de tourisme

(30) Priorität: 14.12.1991 DE 4141293; 18.02.1992 DE 4204825
(43) Veröffentlichungstag der Anmeldung: 23.06.1993
(73) Patentinhaber: Dr.Ing.h.c. F. Porsche Aktiengesellschaft, D-70435 Stuttgart (DE)
(72) Erfinder: Vlahovic, Josip, W-7120 Bietigheim-Bissingen (DE)

(56) Entgegenhaltungen:
- WO-A-90/10797
- CH-A- 240 334
- DE-C- 607 577
- US-A- 2 121 876

## Beschreibung

Die Erfindung bezieht sich auf einen Wagenkasten für Kraftfahrzeuge, insbesondere Personenkraftwagen, der Träger und Aufnahmen für Fahrzeugkomponenten umfaßt.

Bei einem bekannten Wagenkasten der eingangs genannten Gattung (DE 40 08 896 A1) ist die aus mehreren Teilen zusammengesetzte Aufnahme für ein Federbein einerseits an ein Radhaus und andererseits an einen unteren sowie einen oberen Längsträger angeschlossen.

Dieser Anordnung haftet der Nachteil an, daß zur Herstellung der Aufnahme zumindest zwei Blechpreß-Werkzeuge benötigt werden und daß zur Montage der Aufnahme zeitaufwendige Schweißarbeiten erforderlich sind, so daß die Werkzeug- und Montagekosten relativ hoch sind.

Bei einem anderen bekannten Wagenkasten (DE 33 46 986 A1) ist eine Aufnahme für ein Federbein in ein Knotenelement aus Leichtmetall integriert, wobei das Knotenelement an Strangpreßprofile aus Leichtmetall angeschlossen ist. Zur Herstellung des Knotenelementes mit der integrierten Aufnahme ist jedoch ein relativ großflächiges, kostenintensives Gußwerkzeug erforderlich.

Die WO-A-9 010 797 zeigt eine aus Leichtmetallstrangpreßprofilen zusammengesetzte Rahmenstruktur für ein Fahrzeug, wobei sowohl längs- als auch querverlaufende Träger durch ein Knotenelement miteinander verbunden sind. Die Knotenelemente werden durch abgehängte Strangpreßprofilteile gebildet und sind im Endbereich der angegrenzenden Träger eingesteckt.

Aufgabe der Erfindung ist es, eine leicht zu montierende, kostengünstig herstellbare Aufnahme für Fahrzeugkomponenten an einem Wagenkasten zu schaffen, mit der hohe Kräfte aufgenommen und funktionsgerecht in den Wagenkasten eingeleitet werden.

Erfindungsgemäß wird diese Aufgabe durch die kennzeichnenden Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß durch die Ausbildung der Aufnahme als Strangpreßprofilteil eine kostengünstige Aufnahme geschaffen wird, da ein Mundstück zur Herstellung eines Strangpreßprofiles nur äußerst geringe Kosten verursacht im Vergleich zu einem Blechpreß- oder Gußwerkzeug.

Durch das formschlüssige Umgreifen des angrenzenden Trägers wird eine gute Krafteinleitung von der Aufnahme in den Aufbau erzielt. Aufgrund des Fachwerkaufbaues des Strangpreßprofilteiles kann die Aufnahme hohe Kräfte aufnehmen. Mittels einer angeformten U-förmigen Aufnahme kann ein Querlenker auf einfache Art und Weise an der Aufnahme befestigt werden.

Bei C-förmiger oder kanalförmiger Ausbildung des den Träger umgreifenden Aufnahmeabschnittes ist lediglich eine Fixierung der Aufnahme in Längsrichtung erforderlich. Dies kann beispielsweise durch Kleben erfolgen.

Ein Ausführungsbeispiel der Erfindung ist in der Zeichnung dargestellt und wird im folgenden näher erläutert:

Es zeigt
- Fig. 1: eine perspektivische Ansicht von vorne auf einen Träger und eine Aufnahme eines Wagenkastens,
- Fig. 2: eine Ansicht von der Seite auf den Träger auf die Aufnahme,
- Fig. 3: einen Schnitt nach der Linie 3-3 der Fig. 1 in größerem Maßstab,
- Fig. 4: einen Schnitt entsprechend Fig. 3 einer weiteren Ausführungsform einer Aufnahme,
- Fig. 5: einen Schnitt entsprechend Fig. 3 einer weiteren Ausführungsform einer Aufnahme,
- Fig. 6: einen Schnitt entsprechend Fig. 3 einer weiteren Ausführungsform einer Aufnahme,
- Fig. 7: einen Schnitt entsprechend Fig. 3 einer weiteren Ausführungsform einer Aufnahme,
- Fig. 8: einen Schnitt entsprechend Fig. 3 einer weiteren Ausführungsform einer Aufnahme,
- Fig. 9: einen Schnitt entsprechend Fig. 3 einer weiteren Ausführungsform einer Aufnahme,
- Fig. 10: eine perspektivische Ansicht einer weiteren Ausführungsform einer Aufnahme,
- Fig. 11: eine Ansicht in Pfeilrichtung R der Fig. 10,

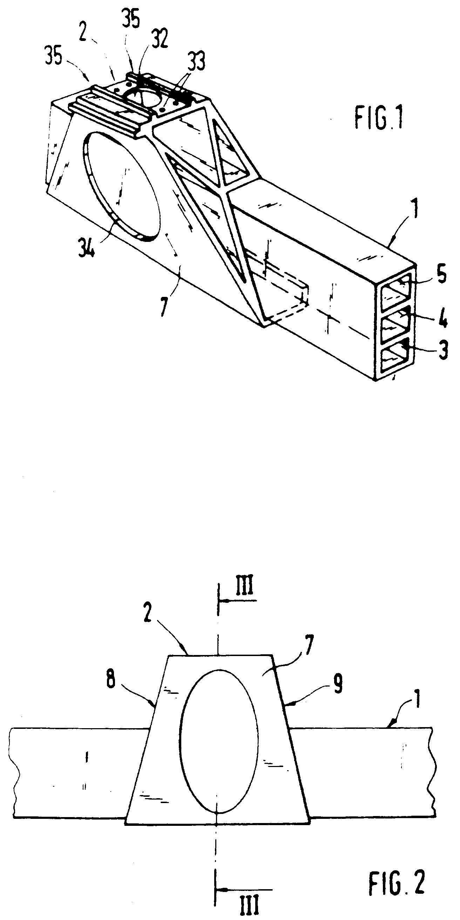

Von einem Wagenkasten für Kraftfahrzeuge, insbesondere Personenkraftwagen, sind in den Fig. 1 und 2 lediglich ein Träger 1 und eine Aufnahme 2 für Fahrzeugkomponenten dargestellt. Träger 1 und Aufnahme 2 können sich im Bugbereich oder im Heckbereich des Personenkraftwagens erstrecken. Die Aufnahme 2 ist in den Fig. 1 bis 12 als Federbeinaufnahme ausgebildet.

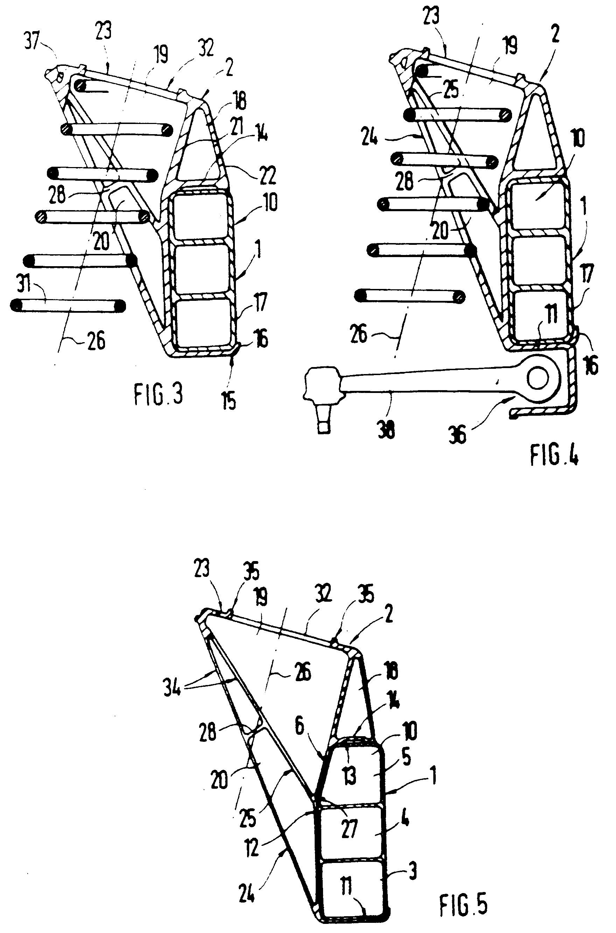

Der Träger 1 wird durch ein Strangpreßprofil gebildet, das vorzugsweise aus Leichtmetall (Aluminim bzw. Aluminiumlegierung) gefertigt ist. Das etwa rechteckförmige Strangpreßprofil setzt sich gemäß den Fig. 1 bis 4 aus drei übereinanderliegenden, geschlossenen Hohlkammerabschnitten 3, 4, und 5 zusammen, die jeweils einen rechteckförmigen oder quadratischen Querschnitt aufweisen. Gemäß Fig. 5 verläuft beim oberen Hohlkammerabschnitt 5 die der Aufnahme 2 zugekehrte Begrenzungsfläche 6 schräg nach oben und innen, d.h. der obere Hohlkammerabschnitt 5 verjüngt sich nach oben hin. Der Träger 1 kann sich in Fahrzeuglängsrichtung, in Fahrzeugquerrichtung, in Höhenrichtung oder jeder beliebigen Richtung erstrecken.

Die Aufnahme 2 wird durch ein separates Strangpreßprofilteil 7 gebildet das den Träger 1 zumindest abschnittsweise formschlüssig umgreift, wobei die Aufnahme 2 zusätzlich am Träger 1 fixiert ist.

Gemäß Fig. 2 ist das ebenfalls aus Leichtmetall (Aluminium bzw. Aluminiumlegierung) gefertigte Strangpreßprofilteil 7 - von der Seite gesehen - trapezförmig beschnitten, wobei sich die aufrechten Seitenkanten 8, 9 nach oben hin verjüngen.

Es besteht jedoch auch die Möglichkeit, daß das Strangpreßprofilteil 7 rechteckförmig, parallelogrammförmig oder dergleichen beschnitten ist (nicht näher dargestellt).

Bei den Fig. 1 bis 8 ist das Strangpreßprofilteil 7 von der Seite her (Außenseite) auf den Träger 1 aufgesetzt und umgibt diesen zumindest abschnittsweise formschlüssig.

Hierzu ist an der Aufnahme 2 gemäß den Fig. 1 bis 8 ein zum Träger 1 hin offener Aufnahmeabschnitt 10 ausgebildet, der einen etwa U-förmigen, C-förmigen oder einen anderen Querschnitt aufweist.

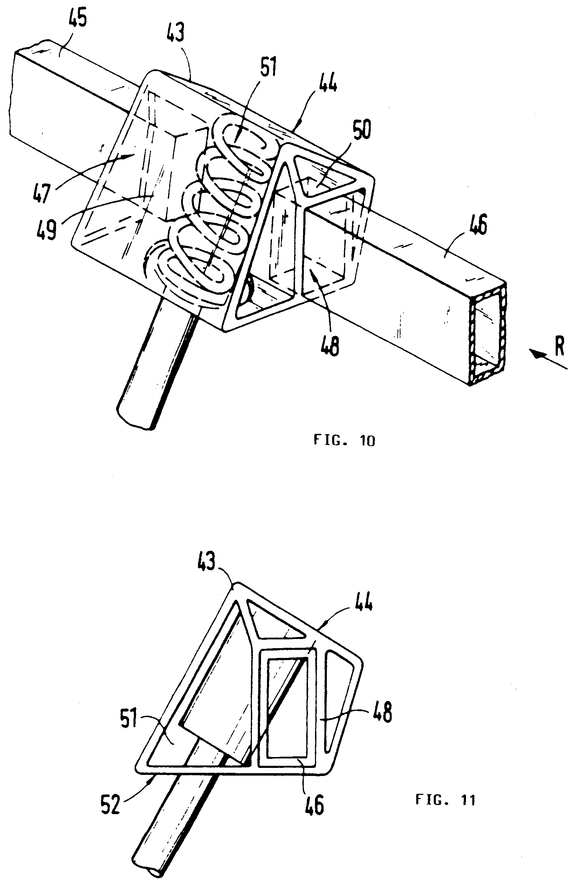

Bei U-förmiger Ausbildung des Aufnahmeabschnittes 10 kann die Aufnahme 2 von oben oder von der Seite her auf den Träger 1 aufgesetzt werden. Gemäß Fig. 9 wird der Aufnahmeabschnitt 10 durch ein geschlosssenes Hohlprofil 10 gebildet, das von einem Ende des Trägers 1 auf diesen aufgeschoben wird.

Bei Fig. 1 bis 4 und 7, 8 liegen ein unterer, horizontaler Steg 11, ein daran anschließender aufrechter Wandabschnitt 12 und ein oberer Steg 13 des Aufnahmeabschnittes 10 an gleichgerichteten Abschnitten des innenliegenden Trägers 1 an. Der obere Steg 13 weist in den Fig. 2 und 5 in einem mittleren Bereich seiner Quererstreckung eine nach oben gerichtete Sicke 14 auf. Entsprechend den Fig. 1, 3, 4, 6 und 8 ist der untere Steg 11 an seinem freien Ende 15 mit einer nach oben gerichteten Abstellung 16 versehen, die sich an einer aufrechten Begrenzungsfläche 17 des Trägers 1 abschnittsweise abstützt. Der Steg 11 kann sich über die gesamte Breite oder aber über einen Teilbereich der Breite des Trägers 1 erstrecken.

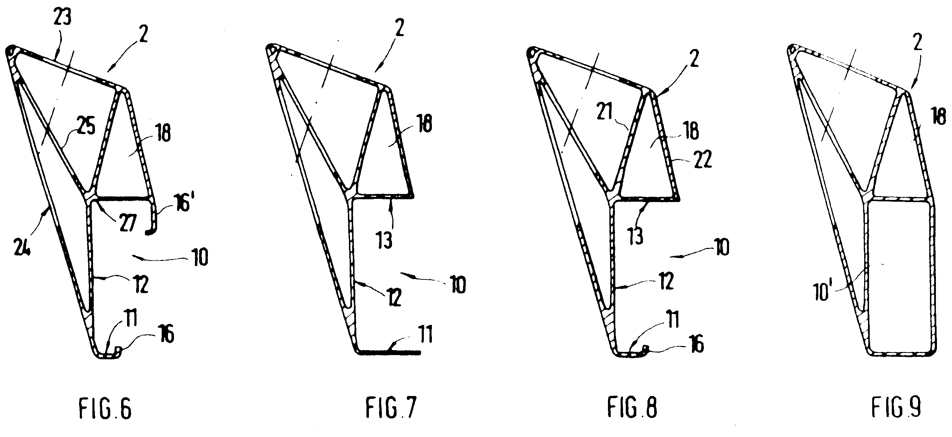

Es besteht die Möglichkeit, auch am oberen Steg 13 endseitig eine nach unten gerichtete Abstellung 16' vorzusehen, die sich abschnittsweise am Träger 1 abstützt (Fig. 6). Entsprechend Fig. 5 weist der aufrechte Steg 12 des Aufnahmeabschnittes 10 einen winkelförmigen Verlauf auf.

Die Fixierung der Aufnahme 2 am Träger 1 kann durch Kleben, Nieten, Schrauben, Schweißen oder dergleichen erfolgen.

Bei den Ausführungsformen gemäß den Fig. 6 und 9 der Aufnahme 2 ist eine Klebeverbindung zwischen Träger 1 und Aufnahme 2 ausreichend, um ein axiales Verschieben der Aufnahme 2 zu verhindern.

Das Strangpreßprofilteil 7 setzt sich im Querschnitt gesehen aus mehreren dreieckförmigen Abschnitten 18, 19, 20 zusammen, die zu einem Fachwerk zusammengsetzt sind.

Gemäß Fig. 3 wird ein erster dreieckförmiger Abschnitt 18 durch ein oberhalb des oberen Steges 13 des Aufnahmeabschnittes 10 angeordnetes Stützdreieck gebildet. Das etwa gleichschenkelige Stützdreieck wird durch den oberen Steg 13 und zwei Schenkel 21, 22 gebildet, wobei der eine Schenkel 21 bei Fig. 5 in Verlängerung des oberen, schräg verlaufenden Teilbereiches des Wandabschnittes 12 verläuft.

Die beiden dreieckförmigen Abschnitte 19, 20 werden durch eine obere Begrenzungswand 23, eine untere Wand 24, eine Zwischenwand 25, und den aufrechten Wandabschnitt 12 des Aufnahmeabschnittes 10 gebildet.

Der obenliegende dreieckförmige Abschnitt 19 setzt sich aus der oberen Begrenzungswand 23, der Zwischenwand 25 und einem oberen Teilbereich des Wandabschnittes 12 bzw. dem Schenkel 21 zusammen. Die obere Begrenzungswand 23 verläuft dabei etwa rechtwinkelig zu einer Federbeinachse 26.

Die Federbeinachse 26 erstreckt sich gemäß Fig. 3 schräg von unten außen nach oben innen. Die Zwischenwand 25 ist in den Fig. 5 bis 9 vom Schnittpunkt 27 der beiden winkelig zueinander verlaufenden Bereiche des Wandabschnittes 12 schräg nach oben außen hin weggeführt. Gemäß den Fig. 3 und 4 ist die Zwischenwand 25 vom unteren vertikalen Bereich des Wandabschnittes 12 weggeführt.

Entsprechend den Fig. 3 bis 5 ist zwischen der Zwischenwand 25 und der unteren Wand 24 örtlich eine Verbindungsstrebe 28 vorgesehen, die etwa rechtwinkelig zu einer der beiden Wände 24, 25 verläuft. Die obere Begrenzungswand 23 ist von der Spitze 29 des ersten Abschnitts 18 weggeführt und erstreckt sich schräg nach außen oben hin. Zur Versteifung der Aufnahme 2 bilden die außenliegenden Endbereiche der oberen Begrenzungswand 23, der Zwischenwand 25 und der unteren Wand 24 ein Hohlprofil 37 (Querschnittsverstärkung).

Zur Aufnahme des nicht näher dargestellten McPherson Federbeines und der Schraubenfeder 31 werden am Strangpreßprofilteil 7 nachträglich eine Durchtrittsöffnung 32, mehrere Montageöffnungen 33 und Aussparungen 34 an der Wand 24 sowie der Zwischenwand 25 erstellt, wobei die mit der Federbeinachse 26 fluchtende Durchtrittsöffnung 32 und die Montageöffnungen 33 an der oberen Begrenzungswand 23 vorgesehen sind. Die Aussparungen 34 sind ebenfalls konzentrisch zur Federbeinachse 26 angeordnet. Die Durchtrittsöffnung 32, die Montageöffnungen 33 und die Aussparungen 34 werden durch Bohren, Fräsen oder dergleichen gefertigt.

An der oberen Begrenzungswand 23 sind benachbart der Durchtrittsöffnung 32 nach oben gerichtete Querschnittsverdickungen 35 vorgesehen, die als längsverlaufende Rippen ausgebildet sind.

Gemäß Fig. 4 ist an den unteren Steg 11 des Aufnahmeabschnittes 10 eine U-förmige Aufnahme 36 zur Befestigung eines Querlenkers 38 angeformt, wobei die offene Seite der Aufnahme 36 zum Querlenker 38 hin gerichtet ist. Die Aufnahme 36 ist einstückig mit dem Strangpreßprofilteil 7 ausgebildet.

Bei den Fig. 1 bis 9 ist die Aufnahme 2 an ein durchgehendes Aufbauteil (Träger 1,) des Wagenkastens angeschlossen.

Gemäß den Fig. 10 und 11 erstreckt sich die durch ein Strangpreßprofilteil 43 aus Leichtmetall gebildete Aufnahme 44 zwischen zwei beabstandeten Trägern 45, 46, wobei die Aufnahme 44 fest mit diesen Trägern 45, 46 verbunden ist. Dies kann durch Schweißen, Kleben, Schrauben, Nieten oder dergleichen erfolgen.

Die Träger 45, 46, die ebenfalls als Strangpreßprofile aus Leichtmetall (Aluminiumlegierung) ausgebildet sind, weisen einen etwa rechteckförmigen Querschnitt auf und fluchten gemäß Fig. 10, miteinander.

Im Ausführungsbeispiel gemäß den Fig. 10 und 11 weist die Aufnahme 44 zwei dem Formverlauf der Außenkontur der Träger 45, 46 angepaßte Aufnahmeabschnitte 47, 48 auf, in die Endbereiche 49, 50 der Träger 45, 46 eingesteckt sind. Zwischen den eingesteckten Endbereichen 49, 50 ist innerhalb der Aufnahme 44 ein freier Raum 51 zur Festlegung von Fahrzeugkomponenten (z.B. Federbeinaufnahme) vorgesehen.

Die profilierte Aufnahme 44 weist benachbart der Aufnahmeabschnitte 47, 48 dreieckförmige bzw. viereckige Abschnitte auf, die ein Fachwerk bilden. An der Unterseite ist eine Öffnung 52 zum Einführen einer Fahrzeugkomponente vorgesehen. Innere Wände des Fachwerks sind im Bereich des Raumes 51 ausgespart.

## Patentansprüche

1. Wagenkasten für Kraftfahrzeuge, insbesondere Personenkraftwagen, der durch Strangpreßprofile aus Leichtmetal gebildete Träger und Federbeinaufnahmen umfaßt, dadurch gekennzeichnet, daß jede Federbeinaufnahme (2; 44) durch ein aus Leichtmetall gefertigtes Strangpreßprofilteil (7; 43) gebildet wird, wobei ein Aufnahmeabschnitt (10; 47, 48) des Strangpreßprofilteils (7; 43) auf zumindest einen angrenzenden Träger (1; 45, 46) des Wagenkastens aufgeschoben und wenigstens bereichsweise formschlüssig mit diesem zusammenwirkt, und daß das zusätzlich fest mit dem Träger (1; 45, 46) verbundene Strangpreßprofilteil (7; 43) mehrere an den Aufnahmeabschnitt (10; 47, 48) angeschlossene, zu einem Fachwerk zusammengesetzte dreieckförmige Abschnitte (18, 19, 20) umfaßt, wobei eine obere Begrenzungswand (23) des Fachwerks etwa rechtwinkelig zu einer Federbeinachse (26) verläuft.

2. Wagenkasten nach Anspruch 1, **dadurch gekennzeichnet**, daß das Strangpreßprofilteil (7, 43) - von der Seite gesehen- rechteckförmig, parallelogrammförmig, trapezförmig oder dergleichen beschnitten ist.

3. Wagenkasten nach den Ansprüchen 1 und 2, **dadurch gekennzeichnet**, daß am Strangpreßprofilteil (7, 43) zumindest ein Aufnahmeabschnitt (10, 47, 48) ausgebildet ist, der den Träger (1, 45, 46) formschlüssig umgibt.

4. Wagenkasten nach den Ansprüchen 1 bis 3, **dadurch gekennzeichnet**, daß ein unterer Steg (11), ein aufrechter Wandabschnitt (12) und ein oberer Steg (13) des Aufnahmeabschnittes (10) zumindest abschnittsweise an der Außenseite von gleichgerichteten Wandabschnitten des angrenzenden, einteiligen Trägers (1) anliegen.

5. Wagenkasten nach Anspruch 1, **dadurch gekennzeichene**t, daß ein erster dreieckförmiger Abschnitt (18) durch ein oberhalb des oberen Steges (13) des Aufnahmeabschnittes (10) angeordnetes, etwa gleichschenkeliges Stützdreieck gebildet ist.

6. Wagenkasten nach Anspruch 1, **dadurch gekennzeichnet**, daß ein zweiter und dritter dreieckförmiger Abschnitt (19, 20) des Strangpreßprofilteiles (7) durch eine obere Begrenzungswand (23), eine untere Wand (24), eine Zwischenwand (25) und den winkelförmigen aufrechten Wandabschnitt (12) bzw. einen Schenkel (21) gebildet werden.

7. Wagenkasten nach den Ansprüchen 1 und 6, **dadurch gekennzeichnet**, daß an der oberen Begrenzungswand (23) eine zentrale Durchtrittsöffnung (32) und mehrere Montageöffnungen (33) für ein Federbein (30) vorgesehen sind.

8. Wagenkasten nach Anspruch 6, **dadurch gekennzeichnet**, daß zwischen der unteren Wand (24) und der Zwischenwand (25) örtlich eine Verbindungsstrebe (28) vorgesehen ist, die etwa rechtwinkelig zu einer der beiden Wände (24, 25) verläuft.

9. Wagenkasten nach den Ansprüchen 1 bis 8, **dadurch gekennzeichnet**, daß an der unteren Wand (24), der Zwischenwand (25) und gegebenenfalls der Verbindungsstrebe (28) Aussparungen (34) zur Aufnahme des Federbeins (30) und einer das Federbein (30) umgebenden Schraubenfeder (31) vorgesehen sind.

10. Wagenkasten nach einem oder mehreren der vorangegangenen Ansprüche, **dadurch gekennzeichnet**, daß eine etwa U-förmige Aufnahme (36) zum Festlegen eines Querlenkers (38) einstückig mit dem Strangpreßprofilteil (7) ausgebildet ist.

11. Wagenkasten nach Anspruch 10, **dadurch gekennzeichne**t, daß die Aufnahme (36) an einen unteren Steg (13) des Aufnahmeabschnittes (10) angeschlossen ist.

12. Wagenkasten nach Anspruch 1, **dadurch gekennzeichnet**, daß die Federbeinaufnahme (2, 44) durch Kleben, Nieten, Schrauben, Schweißen oder dergleichen mit dem Träger (1, 45, 46) verbunden ist.

13. Wagenkasten nach einem oder mehreren der vorangegangenen Ansprüche, **dadurch gekennzeichnet**, daß die außenliegenden Endbereiche der oberen Begrenzungswand (23), der Zwischenwand (25) und der unteren Wand (24) an ein äußeres Hohlprofil (37) angeschlossen sind.

14. Wagenkasten nach Anspruch 1, **dadurch gekennzeichnet**, daß sich das Strangpreßprofilteil (43) zwischen zwei beabstandeten, fluchtenden Trägern (45, 46) erstreckt und mit diesen fest verbunden ist.

## Claims

1. A body for motor vehicles, in particular passenger cars, comprising supports and shock-absorbing-leg holders formed by extruded sections of light metal, **characterized in that** each shock-absorbing-leg holder (2; 44) is formed by an extruded-section part (7; 43) produced from light metal, wherein a receiving portion (10; 47, 48) of the extruded-section part (7; 43) is pressed onto at least one adjacent support (1; 45, 46) of the body and cooperates with positive locking therewith at least in part, and the extruded-section part (7; 43) additionally secured to the support (1; 45, 46) comprises a plurality of triangular portions (18, 19, 20) adjoining the receiving portion (10; 47, 48) and combined to form a lattice structure, wherein an upper boundary wall (23) of the lattice structure extends substantially at a right angle to a shock-absorbing-leg axis (26).

2. A body according to Claim 1, **characterized in that**, as viewed from the side, the extruded-section part (7; 43) is cut into the shape of a rectangle, parallelogram, trapezium or the like.

3. A body according to Claims 1 and 2, **characterized in that** at least one receiving portion (10, 47, 48) surrounding the support (1, 45, 46) with positive locking is formed on the extruded-section part (7, 43).

4. A body according to Claims 1 to 3, **characterized in that** a lower web (11), a vertical wall portion (12) and an upper web (13) of the receiving portion (10) rest at least in part against the outside of wall portions - orientated in the same direction - of the adjacent one-piece support (1).

5. A body according to Claim 1, **characterized in tha**t a first triangular portion (18) is formed by a substantially isosceles support triangle arranged above the upper web (13) of the receiving portion (10).

6. A body according to Claim 1, **characterized in tha**t a second and a third triangular portion (19, 20) of the extruded-section part (7) is formed by an upper boundary wall (23), a lower wall (24), an intermediate wall (25) and the angular, vertical wall portion (12) or a leg (21).

7. A body according to Claims 1 and 6, **characterized in that** a central through opening (32) and a plurality of assembly openings (33) for a shock-absorbing leg (30) are provided on the upper boundary wall (23).

8. A body according to Claim 6, **characterized in that** a connecting strut (28) extending substantially at a right angle to one of the two walls (24, 25) is provided locally between the lower wall (24) and the intermediate wall (25).

9. A body according to Claims 1 to 8, **characterized in that** recesses (34) for receiving the shock-absorbing leg (30) and a helical spring (31) surrounding the shock-absorbing leg (30) are provided on the lower wall (24), on the intermediate wall (25) and optionally on the connecting strut (28).

10. A body according to one or more of the preceding Claims, **characterized in that** a substantially U-shaped holder (36) for fastening a transverse support arm (38) is constructed integrally with the extruded-section part (7).

11. A body according to Claim 10, **characterized in that** the holder (36) is attached to a lower web (13) of the receiving portion (10).

12. A body according to Claim 1, **characterized in that** the shock-absorbing-leg holder (2, 44) is connected to the support (1, 45, 46) by adhesion, riveting, screwing) welding or the like.

13. A body according to one or more of the preceding Claims, **characterized in that** the external end areas of the upper boundary wall (23), the intermediate wall (25) and the lower wall (24) are attached to an outer hollow section (37).

14. A body according to Claim 1, **characterized in that** the extruded-section part (43) extends between two aligned supports (45, 46) at a distance from each other and it is securely connected thereto.

## Revendications

1. Caisse de voiture pour véhicules automobiles, en particulier voitures de tourisme, qui comporte des poutres formées par des profilés extrudés en métal léger et des logements de jambe de force, caractérisée en ce que chaque logement de jambe de farce (2 ; 44) est formé par un élément de profilé extrudé (7 ; 43), réalisé en métal léger, dans laquelle une partion de logement (10 ; 47, 48) de l'élément profilé extrudé (7 ; 43) est enfilée sur au moins une poutre (1 ; 45, 46) adjacente de la caisse de voiture et coopère au moins par endroits, par concordance de forme, avec celle-ci, et l'élément profilé extrudé (7 ; 43), relié en supplément fixement avec la poutre (1 ; 45, 46), comporte plusieurs portions (18, 19, 20) triangulaires raccordées à la portion de logement (10 ; 47, 48), réunies en un treillis, une paroi de délimitation supérieure (23) du treillis s'étendant à peu près à angle droit par rapport à un axe de jambe de force (26).

2. Caisse de voiture selon la revendication 1, caractérisée en ce que l'élément profilé extrudé (7, 43) - vu de côté - est coupé rectangulaire, en forme de parallélogramme, trapézoïdal ou similaire.

3. Caisse de voiture selon les revendications 1 et 2, caractérisée en ce que sur l'élément profilé extrudé (7, 43) est formée au moins une portion de logement (10, 47, 48), qui entoure la poutre (1, 45, 46) par concordance de forme,

4. Caisse de voiture selon les revendications 1 à 3, caractérisée en ce qu'une entretoise inférieure (11), une portion de paroi verticale (12) et une entretoise supérieure (13) de la portion de logement (10) s'appliquent au moins par endroits contre la face extérieure de portions de paroi, dirigées dans le même sens, de la poutre (1) en une partie, adjacente.

5. Caisse de voiture selon la revendication 1, caractérisée en ce qu'une première portion (18) triangulaire est formée par un triangle d'appui à peu près isocèle, placé au-dessus de l'entretoise supérieure (13) de la portion de logement (10).

6. Caisse de voiture selon la revendication 1, caractérisée en ce qu'une deuxième et une troisième portions triangulaires (19, 20) de l'élément profilé extrudé (7) sont formées par une paroi de délimitation supérieure (23), une paroi inférieure (24), une paroi intermédiaire (25) et la portion de paroi (12) verticale angulaire ou une branche (21).

7. Caisse de voiture selon les revendications 1 et 6, caractérisée en ce que sur la paroi de délimitation supérieure (23) sont prévues une ouverture de passage centrale (32) et plusieurs ouvertures de montage (33) pour une jambe de force (30).

8. Caisse de voiture selon la revendication 6, caractérisée en ce qu'entre la paroi inférieure (24) et la paroi intermédiaire (25) est prévue localement une entretoise de liaison (28), qui s'étend à peu près à angle droit par rapport à l'une des deux parois (24, 25).

9. Caisse de voiture selon les revendications 1 à 8, caractérisée en ce que sur la paroi inférieure (24), la paroi intermédiaire (25) et éventuellement l'entretoise de liaison (28) sont prévues des découpes (34) destinées à loger la jambe de force (30) et un ressort hélicoïdal (31), entourant la jambe de force (30).

10. Caisse de voiture selon une ou plusieurs des revendications précédentes, caractérisée en ce qu'un logement (36) à peu près en forme de U est formé d'une seule pièce avec l'élément profilé extrudé (7), pour la fixation d'un bras oscillant transversal (38).

11. Caisse de voiture selon la revendication 10, caractérisée en ce que le logement (36) est raccordé à une entretoise inférieure (13) de la portion de logement (10).

12. Caisse de voiture selon la revendication 1, caractérisée en ce que le logement de jambe de force (2, 44) est assemblé à la poutre (1, 45, 46), par collage, rivetage, vissage, soudage ou similaire.

13. Caisse de voiture selon une ou plusieurs des revendications précédentes, caractérisée en ce que les zones d'extrémité situées à l'extérieur de la paroi de délimitation supérieure (23), de la paroi intermédiaire (25) et de la paroi inférieure (24), sont raccordées à un profilé creux extérieur (37).

14. Caisse de voiture selon la revendication 1, caractérisée en ce que l'élément profilé extrudé (43) s'étend entre deux poutres (45, 46) alignées, espacées, et est relié fixement à celles-ci.
